# EUROPEAN PATENT APPLICATION

(11) **EP 4 171 091 A1**
(43) Date of publication of application: **26.04.2023**
(21) Application number: 21828161.6
(22) Date of filing: 11.03.2021
(51) Int. Cl.: H04W 16/14

(54) **RESOURCE SCHEDULING METHOD, APPARATUS, AND DEVICE, TERMINAL DEVICE, BASE STATION, AND STORAGE MEDIUM**

(30) Priority: 23.06.2020 CN 202010583748
(71) Applicant: ZTE Corporation, Shenzhen, Guangdong 518057 (CN)
(72) Inventor: WAN, Zuhui, Shenzhen, Guangdong 518057 (CN); YAO, Wenjun, Shenzhen, Guangdong 518057 (CN); LIU, Shaolin, Shenzhen, Guangdong 518057 (CN)
(74) Representative: Savi, Massimiliano
(86) International application number: PCT/CN2021/080241
(87) International publication number: WO 2021/258780

(57) **Abstract**

A resource scheduling method, apparatus, and device, a terminal device, a base station, and a storage medium. The resource scheduling method comprises: configuring a parameter of a channel state information reference signal of a cell and a measurement parameter of channel state information of an access network device; measuring non-periodic first channel state information of a shared band, and measuring periodic second channel state information of a non-shared band; and determining, according to the measurement results, whether to schedule a shared band.

## Description

### TECHNICAL FIELD

Embodiments of the present invention relate to the technical field of spectrum sharing, and in particular to a resource scheduling method, apparatus and device, a terminal device, a base station and a storage medium.

### BACKGROUND

Spectrum resources, as scarce resources, are the basis of radio communication. Insufficient frequency supply will affect the development of various radio services. At present, in addition to planning higher frequency band resources for the Internal Mobile Communication (IMT), one important direction is to enhance the efficient use of allocated frequencies. Since the frequency resources have multidimensional attributes such as time and space, enhancing the shared use of frequency resources in time, space or other dimensions becomes an important means to solve the imbalance between supply and demand. However, the use of shared frequency bands will lead to mutual interference of channels among different networks, thus affecting the channel quality.

### SUMMARY

The embodiments of the present invention provide a resource scheduling method, apparatus and device, a terminal device, a base station and a storage medium.

In accordance with an aspect of the present invention, an embodiment provides a resource scheduling method. The method includes: configuring a parameter of a channel state information reference signal of a cell; configuring a channel state information measurement parameter of an access network device, the measurement parameter including an aperiodic measurement parameter and a periodic measurement parameter; measuring aperiodic first channel state information on a shared frequency band to obtain first measurement information; measuring periodic second channel state information on a non-shared frequency band to obtain second measurement information; and, determining whether to schedule the shared frequency band according to the first measurement information and the second measurement information.

In accordance with another aspect of the present invention, an embodiment provides a resource scheduling apparatus. The apparatus includes: a configuration module, configured to measure a parameter of a channel state information reference signal of a cell and a channel state information measurement parameter of an access network device, the channel state information measurement parameter including an aperiodic channel state information measurement parameter and a periodic channel state information measurement parameter; a measurement module, connected to the configuration module and configured to measure aperiodic first channel state information on a shared frequency band to obtain first measurement information and measure periodic second channel state information on a non-shared frequency band to obtain second measurement information; and, a scheduling module, connected to the measurement module and configured to process the first measurement information and the second measurement information to obtain scheduling information and determine whether to schedule the shared frequency band according to the scheduling information.

In accordance with another aspect of the present invention, an embodiment provides a resource scheduling device. The device includes a memory, a processor and a program stored in the memory and executable by the processor which, when executed by the processor, causes the processor to implement the resource scheduling method according to some embodiments of the present invention.

In accordance with another aspect of the present invention, an embodiment provides a terminal device. The terminal device includes the resource scheduling apparatus according to some embodiments of the present invention.

In accordance with another aspect of the present invention, an embodiment provides a base station. The base station includes the resource scheduling apparatus according to some embodiments of the present invention; or, the base station includes a memory, a processor and a program stored in the memory and executable by the processor which, when executed by the processor, causes the processor to implement the resource scheduling method according to some embodiments of the present invention.

In accordance with another aspect of the present invention, an embodiment provides a storage medium for computer-readable storage, the storage medium storing at least one program which, when executed by at least one processer, causes the at least one processer to implement the resource scheduling method according to some embodiments of the present invention.

Other features and advantages of the present invention will be illustrated in the following description, and will partially become apparent from the description or be appreciated by practicing the present invention. The objectives and other advantages of the present invention can be achieved and obtained by the structures specified in the description, the claims, and the accompanying drawings.

### BRIEF DESCRIPTION OF DRAWINGS

FIG. 1 is a structural block diagram of a resource scheduling apparatus according to an embodiment of the present invention;
FIG. 2 is a flowchart of a resource scheduling method according to an embodiment of the present invention;
FIG. 3 is a flowchart of an embodiment of S240 in FIG. 2;
FIG. 4 is a flowchart of an embodiment of S370 in FIG. 3;
FIG. 5 is a flowchart of another embodiment of S370 in FIG. 3;
FIG. 6 is a flowchart of another embodiment after S210 and before S240 in FIG. 2;
FIG. 7 is a flowchart of an embodiment of S610 in FIG. 6;
FIG. 8 is a flowchart of an embodiment of S620 in FIG. 6;
FIG. 9 is a structural block diagram of a resource scheduling device according to an embodiment of the present invention;
FIG. 10 is a structural block diagram of a terminal device according to an embodiment of the present invention;
FIG. 11 is a structural block diagram of a base station according to an embodiment of the present invention; and
FIG. 12 is a structural block diagram of a base station according to another embodiment of the present invention.

### Reference Numerals:

100: resource scheduling apparatus; 110: configuration module; 120: measurement module; 130: scheduling module; steps S210-S240; steps S310-S370; steps S410-S420; steps S510-S530; steps S610-S620; steps S710-S720; steps S810-S820; 900: resource scheduling device; 910, 1210: memory; 920, 1220: processor; 1000: terminal device; and, 1100: base station.

### DETAILED DESCRIPTION

To make the objectives, technical schemes and advantages of the present invention clear, the present invention will be described below in detail by embodiments in conjunction with the accompanying drawings. It should be understood that the specific embodiments described herein are merely for illustrating the present invention, and are not intended to limit the present invention. The embodiments in the present invention and the features in the embodiments can be arbitrarily combined with each other if not in collision.

It is to be noted, although logical orders have been shown in the flowcharts, in some cases, the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

The methods disclosed in the embodiments of the present invention include one or more steps or actions for implementing the methods. The steps and/or actions in the methods may be interchanged with each other without departing from the scope of the claims. In other words, unless a specific order of the steps or actions is specified, the order and/or use of specific steps and/or actions may be modified without departing from the scope of the claims.

As used in the embodiments of the present invention, the term "determine" includes a wide variety of actions. For example, "determine" may include operate, calculate, process, export, research, query (e.g., query in a table, a database or another data structure), judge, and the like. In addition, "determine" may include receive (e.g., receive information), access (e.g., access the data in the memory), and the like. In addition, "determine" may include solve, select, choose, establish, and the like. The term "module" may refer to, for example, a unit including one or a combination of two or more of hardware, software and firmware. The "module" may be used interchangeably with the term "unit", "logic", "logic block", "component" or "circuit". The "module" may be the smallest unit of an integrated component or a part thereof. The "module" may be the smallest unit for executing one or more functions or a part thereof. The "module" may be implemented mechanically or electronically. For example, the "module" according to the present invention may include at least one of an Application-Specific Integrated Circuit (ASIC) chip, a Field-Programmable Gate Array (FPGA) and a programmable logic device for performing known or later developed operations.

The technologies described in the embodiments of the present invention can be applied to various wireless communication technologies, such as LTE, CDMA, TDMA, FDMA, OFDMA, SC-FDMA and other networks. The terms "network" and "system" are often used interchangeably. The CDMA network can implement wireless technologies such as Universal Terrestrial Radio Access (UTRA) and CDMA 2000. The UTRA includes wideband CDMA (WCDMA) and other variants of CDMA. The CDMA 2000 encompasses IS-2000, IS-95 and IS-856 standards. The TDMA network can implement wireless technologies such as Global System for Mobile Communication (GSM). The OFDMA network can implement wireless technologies such as NR (e.g., 5G RA), evolved UTRA (E-UTRA), Ultra Mobile Broadband (UMB), IEEE 802.11 (Wi-Fi), EEE 802.16 (WiMAX), IEE802.20. Flash-OFDMA, and the like. The UTRA and the E-UTRA are part of the Universal Mobile Telecommunications System (UMTS). The term "cell" may refer to a coverage area of a Node B (NB) and/or an NB subsystem that serves this coverage area. In the NR system, the term "cell" may be interchangeable with the next-generation Node B (gNB or gNodeB), NR BS, 5G NB, Access Point (AP), or Transmission and Reception Point (TRP). In some examples, the cell may not necessarily be stationary, and the geographical area of the cell may move according to the location of the mobile BS. The term "user" may refer to a person who uses an electronic device or a device that uses an electronic device (e.g., an artificial intelligent electronic device).

According to most of the embodiments of the present invention, operations are based on the channel state information of channels between a base station (BS) or a g Node B (gNB) and a terminal device (User Equipment (UE)) or a Mobile Station (MS), so that the gNB or UE may need to measure the channel state between the base station and the terminal device. The gNB involves a downlink transmitting/uplink receiving device located at a predetermined position, and one gNB performs transmission and reception for a plurality of cells. In a mobile communication system, a plurality of gNBs may be dispersed geographically, and each gNB may perform transmission and reception for a plurality of cells. The transmission time in the downlink and uplink may be divided into a number of frames. Each frame may have a predetermined duration (e.g., 10 ms), and each frame may include a variable number of slots.

In the embodiments of the present invention, the Channel State Information (CSI) is used for a UE to feed downlink channel quality to the gNB, so that the gNB selects an appropriate Modulation and Coding Scheme (MCS) for downlink data transmission, thereby reducing the Block Error Rate (BLER) of downlink data transmission. The CSI is composed of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI), and a Layer 1 Reference Signal Received Power (L1-RSRP), and the time-frequency domain resources required for transmission of the CSI are controlled by the gNB.

In 5G, a primary and a secondary Synchronization Signal (SS) of a cell are coupled with a Physical Broadcast Channel (PBCH) to a certain extent, and present in the form of SS/PBCH resource blocks, which is called a Synchronization Signal and PBCH block (SSB for short). The transmission period of the physical layer of the SSB may be configured by a high-layer parameter ssb-periodicityServingCell, and has a value range of {5 ms, 10 ms, 20 ms, 40 ms, 80 ms, 160 ms}. The SSB repetition period is mainly set to match the SSB transmission rate. The larger the period is, the less the time domain resources occupied by the SSB are. In one SSB transmission period, the shaped narrow beams transmitted by the SSB at different candidate transmission occasions are not the same.

In some systems (e.g., a Long-Term Evolution (LTE) system), in order to indicate the quality of channels (e.g., the link between the UE and the BS), the UE performs measurement and transmits a CSI report to the BS. For example, the UE may measure the Channel State Information Reference Signal (CSI-RS) transmitted by the BS. The CSI report generally includes a CQI, a PMI and a RI. The base station may variably adjust the CSI-RS transmission power for various purposes, such as improving the accuracy of channel estimation, and the like. Even if the base station changes the CSI-RS transmission power, the terminal device can calculate the accurate CQI and report the calculated CQI to the base station. The CQI may be replaced with the Signal-to-Interference Plus Noise Ratio (SINR).

In a cellular system, the base station should transmit a reference signal to the terminal device to measure the downlink channel state. In an LTE system of 3GPP, the terminal device measures the channel state between the base station and the terminal device by utilizing the CSI-RS or Cell Reference Signal (CRS) transmitted by the base station. In the case of the LTE system, the terminal device feeds information related to the channel state of the downlink to the base station, so that the base station performs downlink scheduling by utilizing the information. That is, the terminal device measures the reference signal transmitted by the base station in the downlink, and feeds extracted information to the base station in the form defined by the LTE standard.

Although the terms generally associated with the 4G and/or 5G wireless technology can be used to described the embodiments of the present invention, the contents of the present invention can be applied to communication systems based on other generations, e.g., 2G, 3G, 5G and later generations.

Spectrum resources are one of the most important assets of an operator, so the operator often operates multiple types of networks simultaneously. After 5G deployment, there will be a situation where 2G, 3G, 4G and 5G operate simultaneously. With the increasing demand for mobile broadband network traffic, the operators refarm 2G/3G networks for 4G and then refarm 4G for 5G. Each of the conventional multiple types of networks of operators need to occupy a certain amount of spectrum resources, and the spectrum resources required by each type are related to the maximum service capacity. Although the service loads of different types have different tidal characteristics, due to the exclusive use of spectrum by each type, staggered spectrum sharing among different types cannot be achieved, resulting in a serious waste of spectrum resources. The spectrum sharing technology can realize the dynamic allocation of spectrum resources on demand on the same frequency band.

Through fine spectrum management, spectrum sharing can be realized in multiple dimensions of frequency domain, time domain and space domain. For example, the unmanned aerial vehicle networking, as one of the important applications of 5G, can significantly increase and improve the spectrum utilization in a dynamic sharing manner by performing reasonable frequency sharing planning in airspace at different altitudes, and cooperating in frequency domain and time domain among different flight levels based on the service load and interference characteristic measurement in combination with dynamic frequency selection and automatic power control functions.

In view of the above, the embodiments of the present invention provide a resource scheduling method, apparatus and device, a terminal device, a base station and a storage medium, which can adaptively schedule shared frequency bands and improve the use efficiency of shared frequency bands while ensuring the channel quality.

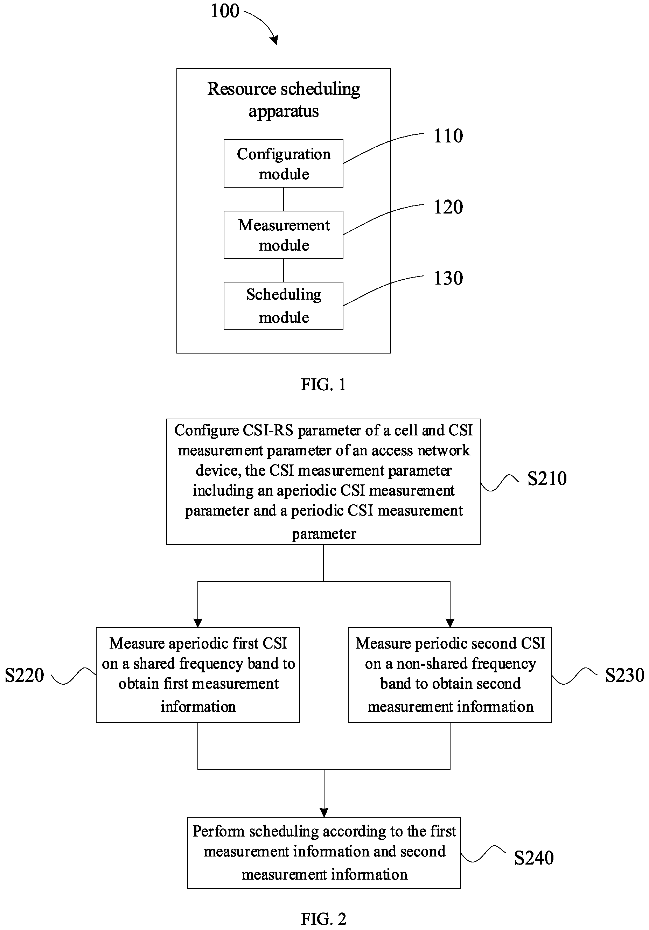

With reference to FIG. 1, an embodiment of the present invention provides a resource scheduling apparatus 100. The resource scheduling apparatus 100 includes: a configuration module 110, a measurement module 120, and a scheduling module 130.

The configuration module 110 is configured to configure a Channel State Information (CSI) report, the CSI report including an aperiodic CSI report and a periodic CSI report.

The measurement module 120 is connected to the configuration module 110 and configured to measure, according to the aperiodic CSI report, aperiodic first channel state information on a shared frequency band to obtain first measurement information, and measure, according to the periodic CSI report, periodic second channel state information on a non-shared frequency band to obtain second measurement information.

The scheduling module 130 is connected to the measurement module 120 and configured to process the first measurement information and the second measurement information to obtain scheduling information, and determine whether to schedule the shared frequency band according to the scheduling information.

In some embodiments, configuring the CSI report includes: configuring a Channel State Information Reference Signal (CSI-RS) parameter of a cell and configuring a CSI measurement parameter of an access network device; the aperiodic CSI report includes an aperiodic CSI measurement parameter; and, the periodic CSI report includes a periodic CSI measurement parameter. The access network device is used to access a wireless communication network of the cell. The access network device may be a user equipment, an access terminal, a user unit, a user station, a mobile station, a mobile radio station, a remote station, a remote terminal, a mobile device, a user terminal, a terminal device, a wireless communication device, a user agent or a user device. The access network device may also be radio phones, Session Initiation Protocol (SIP) phones, Wireless Local Loop (WLL) stations, Personal Digital Assistants (PDAs), handheld devices with a wireless communication function, computing devices, or other processing devices, vehicle-mounted devices or wearable devices connected to a wireless modem, terminal devices in the future 5G NR network, or terminal devices in the future Evolved Public Land Mobile Network (PLMN), and the like.

In some embodiments, the first measurement information includes a first Channel Quality Indicator (CQI) and a first Rank Indicator (RI), and the second measurement information includes a second CQI and a second RI. Processing the first measurement information and the second measurement information to obtain scheduling information includes: acquiring a first equivalent Signal-to-Interference Plus Noise Ratio (SINR) according to the first CQI; acquiring a first equivalent Transport Block Size (TBSIZE) according to the first equivalent SINR, the first RI and a first modulation mode; acquiring a second equivalent SINR according to the second CQI; acquiring a second equivalent TBSIZE according to the second equivalent SINR, the second RI and a second modulation mode; and, acquiring scheduling information according to the first equivalent TBSIZE and the second equivalent TBSIZE. The scheduling information refers to a scheduling scheme of network bandwidth determined according to the interference information of the shared frequency band and the non-shared frequency band. If the shared frequency band has a higher interference than the non-shared frequency band, the shared frequency band cannot be used, and the scheduling information is scheduling the network bandwidth of the non-shared frequency band. If the shared frequency band does not have a higher interference than the non-shared frequency band, the shared frequency band can be used, and the scheduling information is scheduling the full network bandwidth including the shared frequency band and the non-shared frequency band. The larger the equivalent transport block transmitted on the channel is, the smaller the interference of the channel is. By using the equivalent transport block size which is easy to calculate to represent the interference information which is not easy to measure, the resource scheduling efficiency can be improved and the spectrum utilization can thus be improved.

In some embodiments, acquiring scheduling information according to the first equivalent TBSIZE and the second equivalent TBSIZE includes: comparing the first equivalent TBSIZE with the second equivalent TBSIZE to obtain a first comparison result, and performing scheduling according to the first comparison result. For example, if the comparison result shows that the first equivalent TBSIZE is not smaller than the second equivalent TBSIZE, the shared frequency band can be scheduled, and the scheduling information is or indicates scheduling the full network bandwidth including the shared frequency band and the non-shared frequency band. If the comparison result shows that the first equivalent TBSIZE is smaller than the second TBSIZE, the shared frequency band cannot be scheduled, and the scheduling information is or indicates scheduling the network bandwidth of the non-shared frequency band.

In other embodiments, acquiring scheduling information according to the first equivalent TBSIZE and the second equivalent TBSIZE includes: adjusting the second equivalent TBSIZE with an adjustment factor to obtain a third equivalent TBSIZE; comparing the first equivalent TBSIZE with the third equivalent TBSIZE to obtain a second comparison result; and, performing scheduling according to the second comparison result. The adjustment factor is a positive real number not greater than 1, and the adjustment factor may be set according to the anti-interference capability of the resource scheduling apparatus. For example, if the comparison result shows that the first equivalent TBSIZE is smaller than the second equivalent TBSIZE, the shared frequency band cannot be scheduled, and by adjusting the second equivalent TBSIZE with the adjustment factor to make the first equivalent TBSIZE not smaller than the third equivalent TBSIZE, the shared frequency band can be scheduled. Thus, by adjusting the second equivalent TBSIZE with the adjustment factor, the use condition of the shared frequency band can be lowered, and the use efficiency of the shared frequency band is improved without affecting the channel transmission quality, thereby improving the spectrum utilization.

In some embodiments, the CSI-RS includes a period and an offset. The measurement module 120 is further configured to: start a first measurement according to the period, the offset and Downlink Control Information (DCI), the first measurement being a measurement of aperiodic first CSI on the shared frequency band; and, start a second measurement according to the period and the offset, the second measurement being a measurement of periodic second CSI on the non-shared frequency band. The period refers to the number of slots contained in each frame, and the offset refers to a slot position used for trigging CSI measurement in each frame. The slot position corresponds to a start slot used for triggering CSI measurement in each frame.

In some embodiments, starting a first measurement according to the period, the offset and DCI includes: determining a first start slot according to the period, the offset and the DCI, the first start slot being used for triggering the first measurement in each frame. The configuration module 110 supports setting the number of frames. From a starting frame to an ending frame, the CSI measurement is triggered at one or more slot positions of each frame until all frames have completed CSI measurement, indicating one round of CSI measurement has been completed. If a new round of CSI measurement is to be stared, the time axis jumps from the ending frame back to the starting frame, and the CSI measurement is restarted. By setting the start slot, the starting time and ending time of the CSI measurement can be controlled, which facilitates reasonable scheduling. The first measurement is an aperiodic CSI measurement and is triggered by a beam, so the trigger beam of DCI needs to be received in addition to configuring the period and the offset.

In some embodiments, starting a second measurement according to the period and the offset includes: determining a second start slot according to the period and the offset, the second start slot being used for triggering the second measurement in each frame. The second measurement is a periodic CSI measurement and can be directly triggered by the CSI report. By configuring the period and the offset in the CSI report and setting the second start slot according to the period and the offset, a starting time and an ending time of the periodic CSI measurement can be controlled, which facilitating reasonable resource scheduling.

In some embodiments, the first start slot and the second start slot are different. The first start slot is used for aperiodic CSI measurement, the second start slot is used for periodic CSI measurement, and the start slot for aperiodic CSI measurement and the start slot for periodic CSI measurement in each frame should not conflict with each other. If the aperiodic CSI measurement and the periodic CSI measurement are started in the same slot, the signals transmitted on the channel may cross-talk with each other, resulting in erroneous scheduling information. By setting different first start slot and second start slot, mutual crosstalk of signals can be avoided, and the reliability of resource scheduling can be improved.

In some embodiments, the configuration module 110 configures report parameters (e.g., CQI, RI, PMI, CRI, BI, and the like) required for the CSI report, and can support setting at least one report parameter. In other embodiments, the configuration module 110 may also support setting a reporting method (e.g., periodic, aperiodic or semi-permanent reporting, where the aperiodic reporting and the semi-permanent reporting may be configured as a parameter), codebook configuration information, PMI type (full band or partial band), CSI report type (implicit or explicit), channel quality report type (CQI/RSRP), and resource setup.

In NR, the UE is configured by utilizing the CSI report setup. The network may transmit a CSI report trigger, and the CSI report trigger instructs the UE to transmit a CSI report according to the CSI report setup. The UE is also configured by utilizing the CSI-RS resource setup. The CSI-RS resource setup provides the UE with the configuration of CSI-RS ports mapped to time and frequency resources (e.g., Resource Blocks (RBs), Resource Elements (REs)). The UE may be configured to perform channel measurement by utilizing the CSI-RS resource. The CSI-RS report setup and the CSI-RS resource setup are configured through a high-layer signaling. The CSI-RS trigger and the CSI report trigger may be configured through DCI. The CSI-RS trigger is a signaling used for indicating to the UE that the CSI-RS will be transmitted. The transmission of CSI-RS follows the setup indicated by the CSI-RS resource setup.

In the CSI report of LTE, the base station (e.g., BS or gNB) executes the reference signal configuration and report related configuration of the terminal device based on the CSI process through a higher-layer configuration. Therefore, in the case of periodic CSI report, reporting is performed at a previously configured reporting time point and resource; and, in the case of aperiodic CSI report, the configuration information previously configured via a trigger in the DCI is reported, and the DCI is transmitted by the base station through a downlink control signal.

In some embodiments, the periodic CSI report of the cell is configured. As shown in Table 1, the CSI-RS-Resource-Mobility is used for configuring the first period and first offset of the CSI-RS. The first period and the first offset of the CSI-RS are used to determine a frame slot for triggering CSI measurement. The first period of the CSI-RS refers to the number of slots contained in each frame, and the first offset of the CSI-RS refers to the slot position for triggering CSI measurement in each frame. For example, the first period of the CSI-RS is set as 40 slots, indicating that each frame contains 40 slots; and, the first offset of the CSI-RS is set as 23, indicating that the CSI-RS is transmitted to trigger CSI measurement at the 23^{rd} slot position in each frame from the first slot of the first frame. After passing the 40 slots of the first frame, the process automatically jumps to the first slot of the second frame, and so on. The number of frames may be set. The number of frames is used to determining the ending frame of a round of CSI measurement reporting. For example, the number of frames is set as 1024. From the first slot of the first frame to the 40^{th} slot of the 1024^{th} frame, after passing the 40^{th} slot of the 1024^{th} frame, a round of CSI measurement reporting is ended, and the process returns to the first slot of the first frame.

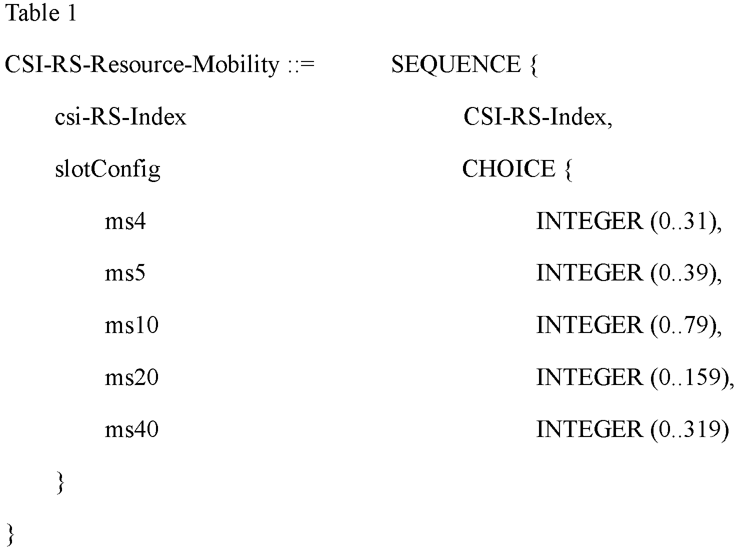

In some embodiments, a measurement range of the UE is configured. As shown in Table 2, the aperiodic is used to configure the aperiodic measurement range, and the measurement range may be set as the shared frequency band. For example, in the LTE-TDD, the frequency band 2575 MHz to 2615 MHz is the shared frequency band of 5G and 4G, and the aperiodic measurement range may be set as 40M bandwidth of 2575 MHz to 2615 MHz.

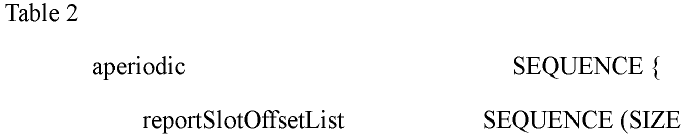

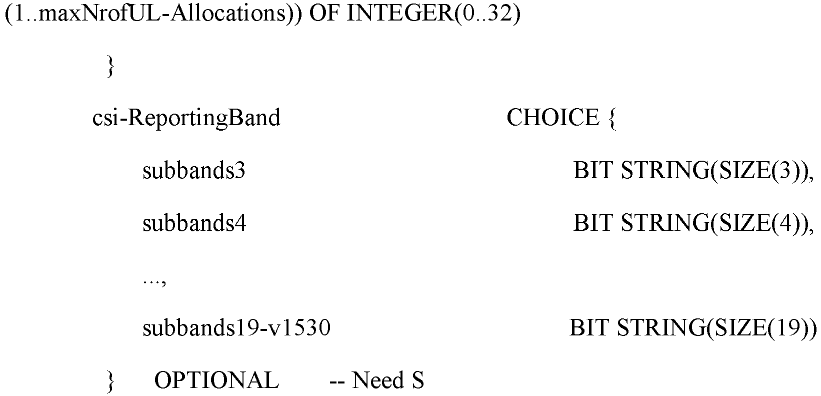

In some embodiments, the measurement range of the UE is configured. As shown in Table 3, the periodic is used to configure the periodic measurement range, and the measurement range may be set as other frequency bands than the shared frequency band. For example, in the LTE-TDD, the frequency band 2575 MHz to 2615 MHz is the shared frequency band of 5G and 4G, and the periodic measurement range may be set as 60M bandwidth of 2615 MHz to 2675 MHz. The reportSlotConfig is used to configure the second period and the second offset of reporting the CSI report measurement of the UE. The second period and the second offset are used to determine the frame slot for triggering CSI measurement. The second period refers to the number of slots contained in each frame, and the second offset refers to the slot position for triggering CSI measurement in each frame. For example, the second period is set as 80 slots, indicating that each frame contains 80 slots; and, the second offset is set as 17, indicating that the CSI measurement is triggered at the 17^{th} slot position in each frame from the first slot of the first frame. After passing the 80 slots of the first frame, the process automatically jumps to the first slot of the second frame.

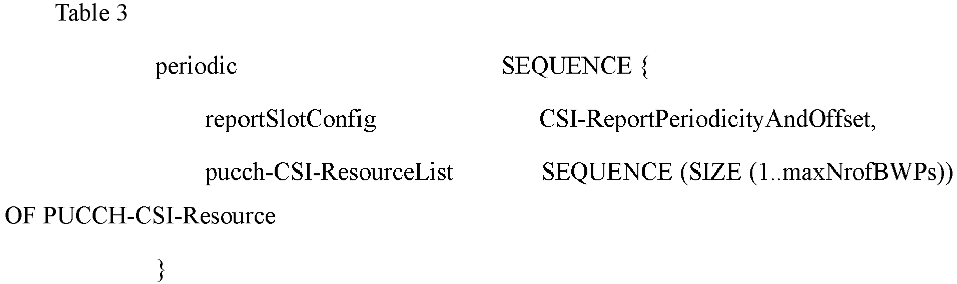

In some embodiments, the measurement module 120 starts the CSI measurement according to the CSI report configured by the configuration module 110. The CSI measurement includes a periodic CSI measurement and an aperiodic CSI measurement. The periodic CSI measurement is used to measure the non-shared frequency band, while the aperiodic CSI measurement is used to measure the shared frequency band. The periodic CSI measurement and the aperiodic CSI measurement have different start slots. For example, the periodic CSI report of the cell is configured in such a way that the first period of the CSI-RS is 40 slots and the first offset of the CSI-RS is 23; the periodic measurement range of the UE is configured as 2615 MHz to 2675 MHz; the aperiodic measurement range of the UE is configured as 2575 MHz to 2615 MHz; and, the periodic CSI report of the UE is configured in such a way that the second period of the CSI-RS is 80 slots and the second offset of the CSI-RS is 17. The first offset of the CSI-RS is 23, and a corresponding air interface occasion is the 29^{th} slot in 40 slots of each frame; and, the second offset of the CSI-RS is 17, and a corresponding air interface occasion is the 19^{th} slot in 80 slots of each frame. During periodic CSI measurement, based on the periodic CSI report trigger, the measurement is started at the 19^{th} slot in 80 slots of each frame. During aperiodic CSI measurement, the aperiodic CSI report is triggered by DCI, and the measurement is started at the 29^{th} slot in 40 slots of each frame. If the periodic CSI measurements are synchronized, it is equivalent to start the measurement at the 29^{th} slot and the 69^{th} slot in 80 slots of each frame.

In the 5G NR system, the aperiodic CSI measurement is triggered by DCI, and the periodic CSI report of the cell is configured in such a way that the first period of the CSI-RS is 40 slots and the first offset of the CSI-RS is 23. As shown in Table 4, the Synchronization Signal and PBCH block (SSB) is configured as 2 beams, i.e., beam 0 and beam 1; the SFN represents a frame sequence number; and, 2n and 2n+1 represent half frames, and 2n and 2n+1 are combined to form a complete n^{th} frame, where n is an integer, and a value range of n is [0,1024]. In the n^{th} frame, half frames 2n and 2n+1 contain 20 slots, respectively; and, at the 23^{rd} slot position of the n^{th} frame, a corresponding air interface occasion is the 29^{th} slot, and the beam 0 is transmitted to trigger CSI measurement. In the (n+1)^{th} frame, half frames 2n+2 and 2n+3 contain 20 slots, respectively; and, at the 23^{rd} slot position of the (n+1)^{th} frame, a corresponding air interface occasion is the 29^{th} slot, and the beam 1 is transmitted to trigger CSI measurement. In the (n+2)^{th} frame, half frames 2n+4 and 2n+5 contain 20 slots, respectively; and, at the 23^{rd} slot position of the (n+2)^{th} frame, a corresponding air interface occasion is the 29^{th} slot, and the beam 0 is transmitted to trigger CSI measurement. In the (n+3)^{th} frame, half frames 2n+6 and 2n+7 contain 20 slots, respectively; and, at the 23^{rd} slot position of the (n+3)^{th} frame, a corresponding air interface occasion is the 29^{th} slot, and the beam 1 is transmitted to trigger CSI measurement.

**Table 4**

| SFN | 2n | 2n+1 | 2n+2 | 2n+3 | 2n+4 | 2n+5 | 2n+6 | 2n+7 |
|---|---|---|---|---|---|---|---|---|
| Slot | | 3 | | 3 | | 3 | | 3 |
| Beam i | | 0 | | 1 | | 0 | | 1 |

In some embodiments, the scheduling module 130 acquires a result of CSI measurement. The result of CSI measurement includes CQI and RI. After the CQI is determined, a corresponding SINR can be obtained by table lookup; and, after the SINR, RI and a modulation mode (e.g., QPSK, 16 QAM, 64 QAM, and the like) are determined, a corresponding TBSIZE can be further obtained by table lookup. By comparing a TBSIZE1 of the periodic CSI measurement with a TBSIZE2 of the aperiodic CSI measurement, the interference information of the shared frequency band can be determined. If the shared frequency band has a high interference, the non-shared frequency band is used for data communication; and, if the shared frequency band has a small interference, the shared frequency band is used for data communication. In some embodiments, the TBSIZE1 of the periodic CSI measurement is compared with the TBSIZE2 of the aperiodic CSI measurement. If the TBSIZE1 is greater than the TBSIZE2, the shared frequency band cannot be used, and only the bandwidth of the non-shared frequency band can be used; and, if the TBSIZE1 is not greater than the TBSIZE2, the full bandwidth including the shared frequency band can be used. In other embodiments, the TBSIZE1 is adjusted with an adjustment factor f to obtain TBSIZE3, the adjustment factor f has a value range of (0,1], and the TB SIZE3 is compared with the TBSIZE2. If the TB SIZE3 is greater than the TBSIZE2, the shared frequency band cannot be used, and only the bandwidth of the non-shared frequency band can be used; and, if the TBSIZE3 is not greater than the TBSIZE2, the full bandwidth including the shared frequency band can be used. The TBSIZE of the periodic CSI measurement is adjusted with the adjustment factor, and the adjustment factor may be set according to the anti-interference capability of the system. By determining whether the shared frequency band can be used, the channel bandwidth can be scheduled. If the shared frequency band can be used, the full bandwidth can be scheduled; and, if the shared frequency band cannot be used, only the bandwidth of the non-shared frequency band can be scheduled.

With reference to FIG. 2, an embodiment of the present invention provides a resource scheduling method, including the following specific steps S210 to S240.

At S210, a CSI-RS parameter of a cell and a CSI measurement parameter of an access network device are configured, where the CSI measurement parameter includes an aperiodic CSI measurement parameter and a periodic CSI measurement parameter.

At S220, aperiodic first channel state information is measured on a shared frequency band to obtain first measurement information.

At S230, periodic second channel state information is measured on a non-shared frequency band to obtain second measurement information.

At S240, scheduling is performed according to the first measurement information and the second measurement information.

In some embodiments, at S210, the CSI-RS parameter of the cell includes a period and an offset, the aperiodic CSI measurement parameter includes a CQI, a RI and a modulation mode, and the periodic CSI measurement parameter includes a CQI and a RI. The periodic CSI measurement and the aperiodic CSI measurement are started in a region with the shared frequency band (e.g., a region that can be covered by a 5G base station and a 4G base station), respectively. The aperiodic CSI measurement is used to measure the shared frequency band, the periodic CSI measurement is used to measure the non-shared frequency band, and the periodic CSI measurement and the aperiodic CSI measurement have different start slots. At S220, the aperiodic CSI measurement is triggered by a beam of the DCI. For example, the periodic CSI report of the cell is configured in such a way that the first period of the CSI-RS is 40 slots and the first offset of the CSI-RS is 22. As shown in Table 5, the SSB is configured as 4 beams, i.e., beam 0, beam 1, beam 2 and beam 3, respectively; the SFN represents a frame sequence number; and, 2n and 2n+1 represent half frames, and 2n and 2n+1 are combined to form a complete n^{th} frame, where n is an integer, and a value range of n is [0,1024]. In the n^{th} frame, half frames 2n and 2n+1 contain 20 slots, respectively; and, at the 22^{nd} slot position of the n^{th} frame, a corresponding air interface occasion is the 28^{th} slot, and the beam 0 is transmitted to trigger CSI measurement. In the (n+1)^{th} frame, half frames 2n+2 and 2n+3 contain 20 slots, respectively; and, at the 22^{nd} slot position of the (n+1)^{th} frame, a corresponding air interface occasion is the 28^{th} slot, and the beam 1 is transmitted to trigger CSI measurement. In the (n+2)^{th} frame, half frames 2n+4 and 2n+5 contain 20 slots, respectively; and, at the 22^{nd} slot position of the (n+2)^{th} frame, a corresponding air interface occasion is the 28^{th} slot, and the beam 2 is transmitted to trigger CSI measurement. In the (n+3)^{th} frame, half frames 2n+6 and 2n+7 contain 20 slots, respectively; and, at the 22^{nd} slot position of the (n+3)^{th} frame, a corresponding air interface occasion is the 28^{th} slot, and the beam 3 is transmitted to trigger CSI measurement.

**Table 5**

| SFN | 2n | 2n+1 | 2n+2 | 2n+3 | 2n+4 | 2n+5 | 2n+6 | 2n+7 |
|---|---|---|---|---|---|---|---|---|
| Slot | | 2 | | 2 | | 2 | | 2 |
| Beam i | | 0 | | 1 | | 2 | | 3 |

At S230, the periodic CSI measurement is triggered by the periodic CSI report. For example, the periodic CSI report of the cell is configured in such a way that the first period of the CSI-RS is 40 slots and the first offset of the CSI-RS is 22; and, the periodic CSI report of the UE is configured in such a way that the second period of the CSI-RS is 80 slots and the second offset of the CSI-RS is 16. The first offset of the CSI-RS is 22, and a corresponding air interface occasion is the 28^{th} slot in 40 slots of each frame; and, the second offset of the CSI-RS is 16, and a corresponding air interface occasion is the 18^{th} slot in 80 slots of each frame. During periodic CSI measurement, the measurement is started at the 18^{th} slot in 80 slots of each frame.

At S240, the interference information of the shared frequency band and the non-shared frequency band can be determined according to the first measurement information and the second measurement information; if the shared frequency band has a higher interference than the non-shared frequency band, the non-shared frequency band is used for data communication; and, if the shared frequency band does not has a higher interference than the non-shared frequency band, the shared frequency band is used for data communication. By determining whether the shared frequency band can be used, the channel bandwidth can be scheduled. If the shared frequency band can be used, the full bandwidth including the shared frequency band and the non-shared frequency band can be scheduled; and, if the shared frequency band cannot be used, only the bandwidth of the non-shared frequency band can be scheduled.

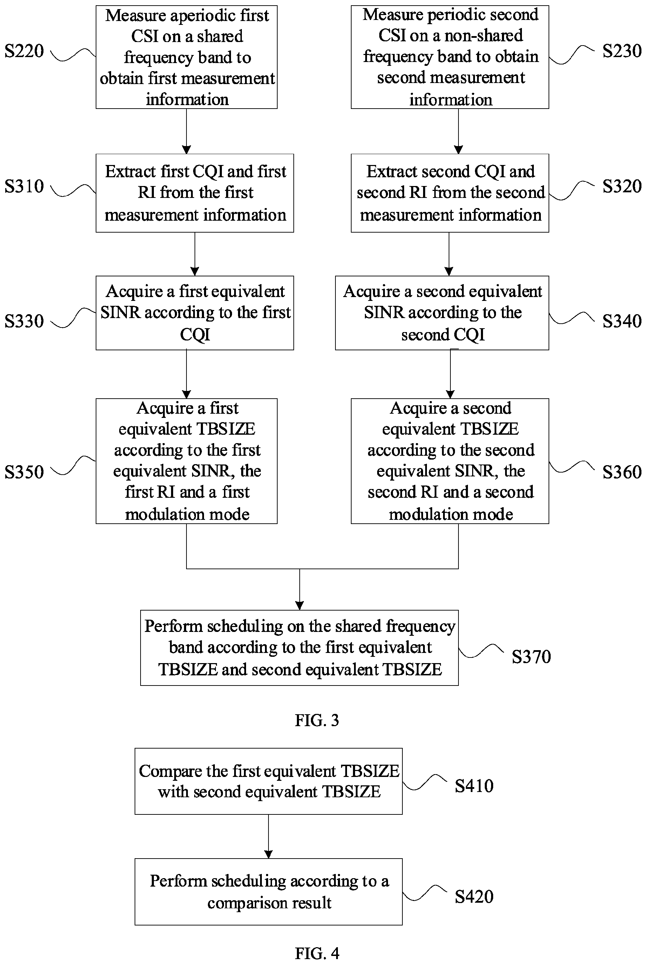

In some embodiments, with reference to FIG. 3, S240 includes the following steps S310 to S370.

At S310, a first Channel Quality Indicator (CQI) and a first Rank Indicator (RI) are extracted from the first measurement information.

At S320, a second CQI and a second RI are extracted from the second measurement information.

At S330, a first equivalent Signal-to-Interference Plus Noise Ratio (SINR) is acquired according to the first CQI.

At S340, a second equivalent SINR is acquired according to the second CQI.

At S350, a first equivalent Transport Block Size (TBSIZE) is acquired according to the first equivalent SINR, the first RI and a first modulation mode.

At S360, a second equivalent TBSIZE is acquired according to the second equivalent SINR, the second RI and a second modulation mode.

At S370, scheduling is performed according to the first equivalent TBSIZE and the second equivalent TBSIZE.

The CQI, PMI, CRI, SSBRI, LI, RI, L1-RSRP, and the like, can be obtained by executing S220 and S230, a corresponding equivalent SINR can be obtained according to the CQI by table lookup, and a corresponding equivalent TBSIZE can be further obtained according to the SINR, RI and modulation mode (e.g., QPSK, 16 QAM, 64 QAM, and the like) by table lookup. The equivalent TBSIZE can be used to estimate channel interference. The higher the channel interference is, the worse the channel quality is; and, the worse the channel quality is, the smaller the equivalent TBSIZE of the channel is. The lower the channel interference is, the better the channel quality is; and, the better the channel quality is, the larger the equivalent TBSIZE of the channel is. By comparing a TBSIZE1 of the periodic CSI measurement with a TBSIZE2 of the aperiodic CSI measurement, the interference information of the shared frequency band and the non-shared frequency band can be determined. If the shared frequency band has a higher interference than the non-shared frequency band, the non-shared frequency band is used for data communication; and, if the shared frequency band does not have a higher interference than the non-shared frequency band, the shared frequency band is used for data communication.

In some embodiments, with reference to FIG. 4, the S370 includes the following steps S410 to S420.

At S410, the first equivalent TBSIZE is compared with the second equivalent TBSIZE.

At S420, scheduling is performed according to a comparison result.

The equivalent TBSIZE may represent the quality of the channel. By comparing the TBSIZE1 of the periodic CSI measurement with the TBSIZE2 of the aperiodic CSI measurement, it is determined whether to use the shared frequency band. For example, through the execution of S310 and S320, CQI1=13 and RI1=1 are obtained for the periodic CSI measurement, and CQI2=14 and RI2=1 are obtained for the aperiodic CSI measurement, where both the periodic CSI measurement and the aperiodic CSI measurement have a modulation mode of 16 QAM. By table lookup, CQI1=13 corresponds to SINR1=15 dB, and CQI2=14 corresponds to SINR2=17 dB. Further, by table lookup, SINR1=15 dB, RI1=1 and the modulation mode of 16 QAM correspond to TBSIZE1=65576 bits, and SINR2=17 dB, RI2=1 and the modulation mode of 16 QAM correspond to TBSIZE2=73776 bits. Since the TNSIZE1 is smaller than the TBSIZE2, that is, the shared frequency band has a better channel quality than the non-shared frequency band, the shared frequency band can be used for data communication, that is, the full bandwidth including the shared frequency band and the non-shared frequency band can be scheduled. For example, through the execution of S310 and S320, CQI1=13 and RI1=1 are obtained for the periodic CSI measurement, and CQI2=2 and RI2=1 are obtained for the aperiodic CSI measurement, where both the periodic CSI measurement and the aperiodic CSI measurement have a modulation mode of 16 QAM. By table lookup, CQI1=13 corresponds to SINR1=15 dB, and CQI2=2 corresponds to SINR2=-2 dB. Further, by table lookup, SINR1=15 dB, RI1=1 and the modulation mode of 16 QAM correspond to TBSIZE1=65576 bits, and SINR2=-2 dB, RI2=1 and the modulation mode of 16 QAM correspond to TBSIZE2=5384 bits. Since the TNSIZE1 is greater than the TBSIZE2, that is, the non-shared frequency band has a better channel quality than the shared frequency band, the shared frequency band cannot be used for data communication, that is, only the bandwidth of the non-shared frequency band can be scheduled.

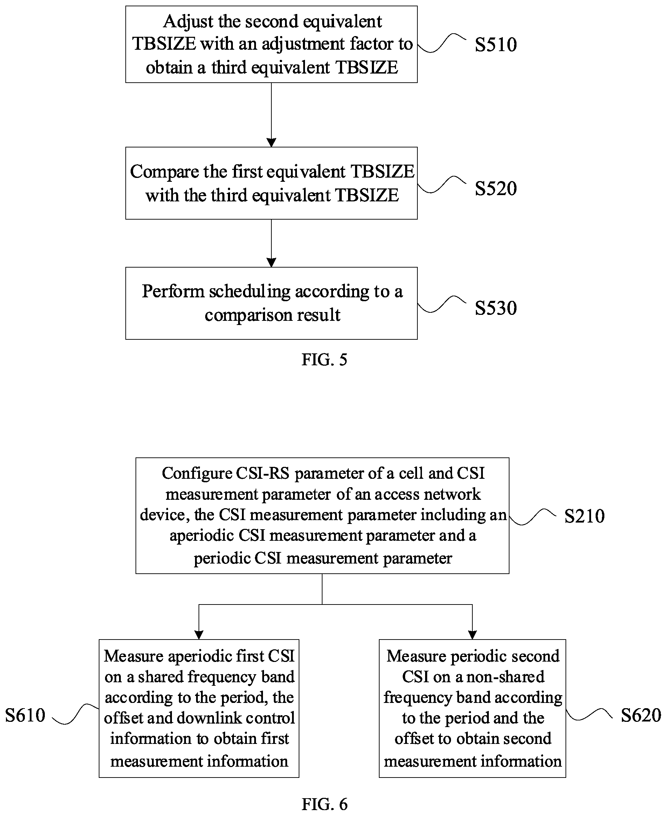

In some embodiments, with reference to FIG. 5, S370 includes the following steps S510 to S530.

At S510, the second equivalent TBSIZE is adjusted with an adjustment factor to obtain a third equivalent TBSIZE.

At S520, the first equivalent TBSIZE is compared with the third equivalent TBSIZE.

At S530, scheduling is performed according to a comparison result.

The TBSIZE of the periodic CSI measurement is adjusted with the adjustment factor, the adjustment factor may be set according to the anti-interference capability of the system, and the adjustment factor f has a value range of (0,1]. Within the bearable interference range of the system, by adjusting the TBSIZE of the non-shared frequency band, the use condition of the shared frequency band can be lowered, and the use efficiency of the shared frequency band can be improved. For example, through the execution of S310 and S320, the CQI1=13 and RI1=1 are obtained for the periodic CSI measurement, and the CQI2=2 and RI2=1 are obtained for the aperiodic CSI measurement, where both the periodic CSI measurement and the aperiodic CSI measurement have a modulation mode of 16 QAM. By table lookup, CQI1=13 corresponds to SINR1=15 dB, and CQI2=2 corresponds to SINR2=-2 dB. Further, by table lookup, SINR1=15 dB, RI1=1 and the modulation mode of 16 QAM correspond to TBSIZE1=65576 bits, and SINR2=-2 dB, RI2=1 and the modulation mode of 16 QAM correspond to TBSIZE2=5384 bits. Through the execution of S510, the TBSIZE1 is adjusted with an adjustment factor f=0.05 (TBSIZE1^{∗}f) to obtain TBSIZE3=3278.8 bits. Since the TNSIZE2 is greater than the TBSIZE3, that is, the shared frequency band has a better channel quality than the non-shared frequency band, the shared frequency band can be used for data communication, that is, the full bandwidth including the shared frequency band and the non-shared frequency band can be scheduled. If the TBSIZE1 is not adjusted with the adjustment factor f, since the TNSIZE1 is greater than the TBSIZE2, that is, the non-shared frequency band has a better channel quality than the shared frequency band, the shared frequency band cannot be used for data communication, that is, only the bandwidth of the non-shared frequency band can be scheduled. The use condition of the shared frequency band is lowered due to the use of the adjustment factor.

In some embodiments, after S210 and prior to S240, with reference to FIG. 6, the CSI-RS include a period and an offset, and the resource scheduling method further includes the following steps S610 to S620.

At S610, S220 is executed according to the period, the offset and Downlink Control Information (DCI).

At S620, S230 is executed according to the period and the offset.

Both the periodic CSI measurement and the aperiodic CSI measurement are triggered based on a CSI report, and the CSI report needs to be configured before the CSI measurement is started. Configuring the periodic CSI report of the cell is mainly to configure the period and offset of the CIS-RS, which are used to determine the frame slot for triggering CSI measurement. The period of the CSI-RS refers to the number of slots contained in each frame, and the offset of the CSI-RS refers to a slot position for triggering CSI measurement in each frame. At S610, the periodic CSI report is configured according to the period and the offset. At S620, since the aperiodic CSI measurement is triggered by the beam of the DCI, the aperiodic CSI report needs to be configured according to the period, the offset and the DCI. The CSI-RS of the cell may be configured by utilizing the CSI-RS-Resource-Mobility shown in Table 1, the aperiodic CSI report of the UE may be configured by utilizing the aperiodic shown in Table 2, and the periodic CSI report of the UE may be configured by utilizing the periodic shown in Table 3.

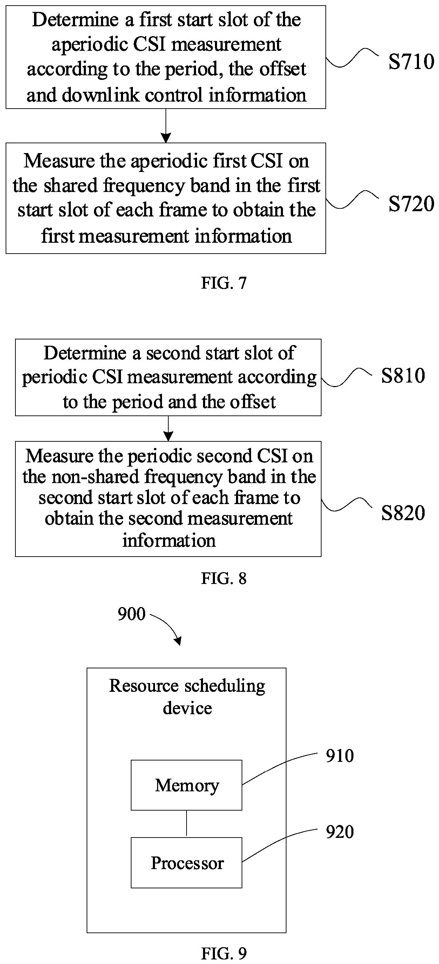

In some embodiments, with reference to FIG. 7, S610 includes the following steps S710 to S720.

At S710, a first start slot of the aperiodic CSI measurement is determined according to the period, the offset and the DCI.

At S720, S220 is executed in the first start slot of each frame.

The period of the CSI-RS can determine the number of slots contained in each frame, the offset of the CSI-RS can determine the slot position for triggering CSI measurement in each frame, and there is a correspondence between the slot position for triggering CSI measurement and the start slot for triggering CSI measurement. For example, if the offset is 22, a corresponding start slot is the 28^{th} slot; and, if the offset is 16, a corresponding start slot is the 18^{th} slot. During the configuration of the aperiodic CSI report, the first start slot of an air interface occasion is determined according to the period, the offset and the DCI, and the reporting of the aperiodic CSI measurement report is triggered by a beam in the first start slot of each frame.

In some embodiments, with reference to FIG. 8, S620 includes the following steps S810 to S820.

At S810, a second start slot of the periodic CSI measurement is determined according to the period and the offset.

At S820, S230 is executed in the second start slot of each frame.

The period of the CSI-RS can determine the number of slots contained in each frame, and the offset of the CSI-RS can determine the slot position for triggering CSI measurement in each frame. The slot position indicated by the offset is not the start slot for triggering CSI measurement, and there is a correspondence between the slot position and the start slot for triggering CSI measurement. For example, if the offset is 23, a corresponding start slot is the 29^{th} slot; and, if the offset is 17, a corresponding start slot is the 19^{th} slot. During the configuration of the periodic CSI report, the second start slot of the air interface occasion is determined according to the period and the offset, and the periodic CSI measurement report is reported in the second start slot of each frame.

In some embodiments, the first start slot of the aperiodic CSI measurement and the second start slot of the periodic CSI measurement are different. The start slot of the aperiodic CSI measurement and the start slot of the periodic CSI measurement in each frame should not conflict with each other. By setting the first start slot and second start slot to be different, the conflict therebetween can be avoided, crosstalk of signals transmitted on channels can be avoided, and the reliability of resource scheduling can be improved.

With reference to FIG. 9, an embodiment of the present invention provides a resource scheduling device 900. The resource scheduling device 900 includes a memory 910, a processor, and a program stored in the memory 910 and executable by the processor 920. The program, when executed by the processor 920, causes the processor 920 to implement the resource scheduling method according to some embodiments of the present invention.

The resource scheduling device may include UEs. The UEs may be distributed over a wireless communication network, and each UE may be stationary or mobile. The UEs may also be called mobile stations, terminal devices, access terminals, user units, stations, Customer Premise Equipment (CPE), cellular phones, smart phones, Personal Digital Assistants (PDAs), wireless modems, wireless communication devices, handheld devices, laptop computers, cordless phones, Wireless Local Loop (WLL) stations, tablet computers, cameras, game devices, netbooks, smart books, ultrabooks, electric appliances, medical devices or medical facilities, biological sensors/devices, wearable devices (such as smart watches, smart clothes, smart glasses, smart wristbands, smart jewelry (e.g., smart rings, smart bracelets, and the like)), entertainment devices (e.g., music devices, video devices, satellite radio, and the like), vehicle components or sensors, intelligent instruments/sensors, industrial manufacturing devices, global positioning system devices, or any other suitable devices configured to communicate via a wireless or wired medium. Some UEs may be considered as Machine Type Communication (MTC) devices or evolved MTC (eMTC) devices. For example, robots, UAVs, remote devices, sensors, instruments, monitors, location tags, and the like may communicate with a BS or another device (e.g., remote device). Radio nodes may provide connections for a network or to a network (e.g., a wide area network, such as the Internet or a cellular network), for example, via a wired or wireless communication link. Some UEs may be considered as Internet of Things (IoT) devices, which may be narrowband IoT (NB-IoT) devices.

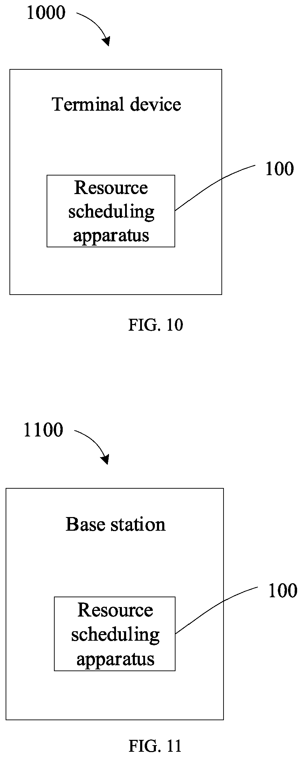

With reference to FIG. 10, an embodiment of the present invention provides a terminal device 1000. The terminal device 1000 includes the resource scheduling apparatus 100 according to some embodiments of the present invention.

The terminal device may include, for example, at least one of a smart phone, a tablet computer, a Personal Computer (PC), a mobile phone, a video phone, an e-book reader, a desktop PC, a laptop PC, a netbook, a computer, a workstation, a server, a Personal Digital Assistant (PDA), a Portable Multimedia Player (PMP), an MPEG-1 audio layer 3 (MP3) player, a mobile medical device, a camera, or a wearable device. The wearable device may include at least one of an accessory type (e.g., a watch, a ring, a bracelet, an anklet, a necklace, a pair of glasses, a pair of contact lenses or a Head-Mounted Device (HMD)), a fabric or clothing integrated type (e.g., electronic clothing), a body-mounted type (e.g., a skin pad or a tattoo), or a bio-implantable type (e.g., an implantable circuit).

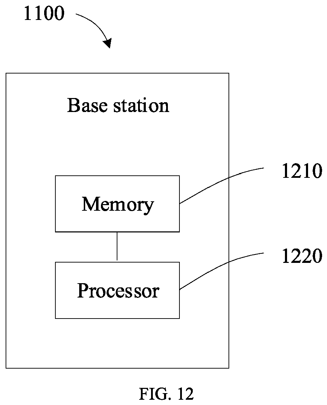

An embodiment of the present invention provides a base station 1110. With reference to FIG. 11, the base station 1100 includes the resource scheduling apparatus 100 according to some embodiments of the present invention; or, with reference to FIG. 12, the base station 1100 includes a memory 1210, a processor 1220, and a program stored in the memory 1210 and executable by the processor 1220 which, when executed by the processor 1220, causes the processor 1220 to implement the resource scheduling method according to some embodiments of the present invention.

In some embodiments, the base station allocates resources used for communication between some or all devices or apparatuses in a serving region or cell. The base station may be responsible for the scheduling, allocation, reconfiguration and release of resources for one or more slave terminal devices. That is, for the scheduled communication, the slave terminal devices use the resources allocated by the base station. In other embodiments, a UE may play a role in resource scheduling, and may perform resource scheduling for one or more slave terminal devices (e.g., one or more other UEs); and, other UEs may use the resources scheduled by the UE for wireless communication. In some embodiments, the UE may play a role in resource scheduling in a Peer-to-Peer (P2P) network and/or a mesh network. In an example of a mesh network, in addition to communicating with the base stations, UEs may directly communicate with each other.

An embodiment of the present invention provides a storage medium for computer-readable storage. The storage medium stores at least one program which, when executed by at least one processer, causes the at least one processer to implement the resource scheduling method according to some embodiments of the present invention.

In the embodiments of the present invention, the following schemes are provided: a parameter of a channel state information reference signal of a cell and a channel state information measurement parameter of an access network device are configured; aperiodic first channel state information is measured on a shared frequency band, and periodic second channel state information is measured on a non-shared frequency band; and, it is determined whether to schedule the shared frequency band according to a result of measurement. In accordance with the embodiments of the present invention, the shared frequency band can be adaptively scheduled, so that the use efficiency of the shared frequency band is improved while ensuring the channel quality, and the utilization of radio spectrum resources is thus improved.

It should be understood by those having ordinary skill in the art that, all or some of the steps in the methods disclosed above and the functional modules/units in the apparatuses and devices disclosed above may be implemented as software, firmware, hardware and suitable combinations thereof.

In the hardware implementation, the division of the functional modules/units mentioned above does not necessarily correspond to the division of physical components. For example, one physical component may have multiple functions, or one function or step may be cooperatively executed by a plurality of physical components. Some or all of the physical components may be implemented as software executed by processors such as central processors, digital signal processors or microprocessors, or implemented as hardware, or implemented as integrated circuits such as application-specific integrated circuits. Such software may be distributed on computer-readable mediums, and the computer-readable mediums may include computer storage mediums (or non-transitory mediums) and communication mediums (or transitory mediums). As well-known to those having ordinary skill in the art, the term "computer storage medium" includes volatile or non-volatile and removable or non-removable mediums implemented in any method or technology used to store information (such as computer-readable instructions, data structures, program modules or other data). The computer storage medium includes, but not limited to, RAMs, ROMs, EEPROMs, flash memories or other memory technologies, CD-ROMs, Digital Versatile Disks (DVDs) or other optical disk storages, magnetic cassettes, magnetic tapes, magnetic disk storages or other magnetic storage devices, or any other mediums which can be used to store desired information and can be accessed by computers. In addition, as well-known to those having ordinary skill in the art, the communication mediums generally contain computer-readable instructions, data structures, program modules or other data in modulated data signals such as carriers or other transmission mechanisms, and may include any information transfer medium.

Although several embodiments of the present invention have been described above, the present invention is not limited to the above implementations. Those having ordinary skill in the art can make various equivalent variations or replacements without departing from the scope of the present invention, and these equivalent variations or replacements shall fall into the scope defined by the appended claims of the present invention.

## Claims

1. A resource scheduling method, comprising:
configuring a parameter of a channel state information reference signal of a cell;
configuring a channel state information measurement parameter of an access network device, the channel state information measurement parameter comprising an aperiodic channel state information measurement parameter and a periodic channel state information measurement parameter;
measuring aperiodic first channel state information on a shared frequency band to obtain first measurement information;
measuring periodic second channel state information on a non-shared frequency band to obtain second measurement information; and
performing scheduling according to the first measurement information and the second measurement information.

2. The resource scheduling method of claim 1, wherein the first measurement information comprises a first channel quality indicator and a first rank indicator, the second measurement information comprises a second channel quality indicator and a second rank indicator, and performing scheduling according to the first measurement information and the second measurement information comprises:
acquiring a first equivalent Signal-to-Interference Plus Noise Ratio, SINR, according to the first channel quality indicator;
acquiring a first equivalent transport block size according to the first equivalent SINR, the first rank indicator and a first modulation mode;
acquiring a second equivalent SINR according to the second channel quality indicator;
acquiring a second equivalent transport block size according to the second equivalent SINR, the second rank indicator and a second modulation mode; and
performing scheduling according to the first equivalent transport block size and the second equivalent transport block size.

3. The resource scheduling method of claim 2, wherein performing scheduling according to the first equivalent transport block size and the second equivalent transport block size comprises:
comparing the first equivalent transport block size with the second equivalent transport block size to obtain a first comparison result; and
performing scheduling according to the first comparison result.

4. The resource scheduling method of claim 2, wherein performing scheduling according to the first equivalent transport block size and the second equivalent transport block size comprises:
adjusting the second equivalent transport block size with an adjustment factor to obtain a third equivalent transport block size;
comparing the first equivalent transport block size with the third equivalent transport block size to obtain a second comparison result; and
performing scheduling according to the second comparison result.

5. The resource scheduling method of any one of claims 1 to 4, wherein the parameter of the channel state information reference signal comprises a period and an offset; and, prior to measuring aperiodic first channel state information on a shared frequency band and measuring periodic second channel state information on a non-shared frequency band, the method further comprises:
starting a first measurement according to the period, the offset and downlink control information, the first measurement being a measurement of aperiodic first channel state information on the shared frequency band; and
starting a second measurement according to the period and the offset, the second measurement being a measurement of periodic second channel state information on the non-shared frequency band.

6. The resource scheduling method of claim 5, wherein starting a first measurement according to the period, the offset and downlink control information comprises:
determining a first start slot of the first measurement according to the period, the offset and the downlink control information; and
starting the first measurement in the first start slot of each frame.

7. The resource scheduling method of claim 6, wherein starting a second measurement according to the period and the offset comprises:
determining a second start slot of the second measurement according to the period and the offset; and
starting the second measurement in the second start slot of each frame.

8. The resource scheduling method of claim 7, wherein the first start slot and the second start slot are different.

9. A resource scheduling apparatus, comprising:
a configuration module, configured to measure a parameter of a channel state information reference signal of a cell and a channel state information measurement parameter of an access network device, the channel state information measurement parameter comprising an aperiodic channel state information measurement parameter and a periodic channel state information measurement parameter;
a measurement module, connected to the configuration module and configured to measure aperiodic first channel state information on a shared frequency band to obtain first measurement information and measure periodic second channel state information on a non-shared frequency band to obtain second measurement information; and
a scheduling module, connected to the measurement module and configured to process the first measurement information and the second measurement information to obtain scheduling information and perform scheduling according to the scheduling information.

10. The resource scheduling apparatus of claim 9, wherein the first measurement information comprises a first channel quality indicator and a first rank indicator, the second measurement information comprises a second channel quality indicator and a second rank indicator, and processing the first information and the second measurement information to obtain scheduling information comprises:
acquiring a first equivalent Signal-to-Interference Plus Noise Ratio, SINR, according to the first channel quality indicator;
acquiring a first equivalent transport block size according to the first equivalent SINR, the first rank indicator and a first modulation mode;
acquiring a second equivalent SINR according to the second channel quality indicator;
acquiring a second equivalent transport block size according to the second equivalent SINR, the second rank indicator and a second modulation mode; and
acquiring scheduling information according to the first equivalent transport block size and the second equivalent transport block size.

11. The resource scheduling apparatus of claim 10, wherein acquiring scheduling information according to the first equivalent transport block size and the second equivalent transport block size comprises:
comparing the first equivalent transport block size with the second equivalent transport block size to obtain a first comparison result; and
performing scheduling according to the first comparison result.

12. The resource scheduling apparatus of claim 10, wherein acquiring scheduling information according to the first equivalent transport block size and the second equivalent transport block size comprises:
adjusting the second equivalent transport block size with an adjustment factor to obtain a third equivalent transport block size;
comparing the first equivalent transport block size with the third equivalent transport block size to obtain a second comparison result; and
performing scheduling according to the second comparison result.

13. The resource scheduling apparatus of any one of claims 9 to 12, wherein the parameter of the channel state information reference signal comprises a period and an offset, and the measurement module is further configured to:
start a first measurement according to the period, the offset and downlink control information, the first measurement being a measurement of aperiodic first channel state information on the shared frequency band; and
start a second measurement according to the period and the offset, the second measurement being a measurement of periodic second channel state information on the non-shared frequency band.

14. The resource scheduling apparatus of claim 13, wherein starting a first measurement according to the period, the offset and downlink control information comprises:
determining a first start slot of the first measurement according to the period, the offset and the downlink control information; and
starting the first measurement in the first start slot of each frame.

15. The resource scheduling apparatus of claim 14, wherein starting a second measurement according to the period and the offset comprises:
determining a second start slot of the second measurement according to the period and the offset; and
starting the second measurement in the second start slot of each frame.

16. The resource scheduling apparatus of claim 15, wherein the first start slot and the second start slot are different.

17. A resource scheduling device, comprising a memory, a processor, and a program stored in the memory and executable by the processor which, when executed by the processor, causes the processor to perform the resource scheduling method of any one of claims 1 to 8.

18. A terminal device, comprising the resource scheduling apparatus of any one of claims 9 to 16.

19. A base station, comprising the resource scheduling apparatus of any one of claims 9 to 16; or,
the base station comprises a memory, a processor and a program stored in the memory and executable by the processor which, when executed by the processor, causes the processor to perform the resource scheduling method of any one of claims 1 to 8.

20. A storage medium for computer-readable storage, the storage medium storing at least one program which, when executed by at least one processor, causes the at least one processor to perform the resource scheduling method of any one of claims 1 to 8.
